# EUROPEAN PATENT APPLICATION

(11) **EP 4 641 771 A1**
(43) Date of publication of application: **29.10.2025**
(21) Application number: 24203856.0
(22) Date of filing: 01.10.2024
(51) Int. Cl.: H01M 10/658, H01M 50/213, H01M 50/264, H01M 50/325, H01M 50/383, H01M 50/209, H01M 50/342, H01M 50/367

(54) **BATTERY BOXES AND BATTERY SYSTEMS**

(30) Priority: 23.04.2024 CN 202420855549 U; 21.06.2024 WO PCT/CN2024/100625
(71) Applicant: Eve Energy Co., Ltd., Huizhou, Guangdong 516006 (CN)
(72) Inventor: WU, Shenqiong, Huizhou, Guangdong 516006 (CN)
(74) Representative: Murgitroyd & Company

(57) **Abstract**

A battery box and a battery system are provided. A support plate (200) and a side plate assembly (110) in the battery box are enclosed to form a first accommodating cavity (120). The support plate (200) is provided with a plurality of first through holes (210), and each of the first through holes (210) is disposed in one-to-one correspondence with an explosion-proof valve of each of the single-cells (400). A first surface of the support plate (200) is provided with a first heat insulating layer (220), and the first heat insulating layer (220) seals each of the first through holes (210). A bottom plate (300) and the support plate (200) are spaced apart, and the bottom plate (300), the support plate (200) and the side plate assembly (110) are enclosed to form a pressure relief cavity (310).

## Description

### FIELD OF INVENTION

The present disclosure relates to the field of battery technology, and in particular to battery boxes and battery systems.

### BACKGROUND OF INVENTION

With the development of battery technology, batteries are widely used in electric vehicles, and the battery box is an important part of the battery system. The battery box is generally provided with a pressure relief cavity, through which the pressure can be relieved when thermal runaway occurs in the battery. Thermal runaway of the battery refers to that during the charging or discharging process of the battery, the internal chemical reaction of the battery is out of control, resulting in a rapid increase of the temperature which beyond the normal operating range, thereby generating a large amount of heat and gas, and which may even cause an explosion or fire.

### SUMMARY OF INVENTION

In related technologies, the adhesive in the battery box easily leaks into the pressure relief cavity, causing the pressure relief cavity to be blocked. When an individual single-cell experiences thermal runaway, it is easy to cause thermal runaway of multiple single-cells and result in thermal spread.

The present disclosure provides a battery box including: a box main body, the box main body includes a side plate assembly; a support plate, the support plate and the side plate assembly are enclosed to form a first accommodating cavity, the first accommodating cavity is configured to accommodate a plurality of single-cells, and each of the single-cells is provided with an explosion-proof valve; the support plate is provided with a plurality of first through holes, and each of the first through holes is disposed in one-to-one correspondence with the explosion-proof valve of each of the single-cells, a first surface of the support plate is provided with a first heat insulating layer, and the first heat insulating layer seals each of the first through holes; and a bottom plate, the bottom plate and the support plate are spaced apart, and the bottom plate, the support plate and the side plate assembly are enclosed to form a pressure relief cavity; the first heat insulating layer is configured to pass through a corresponding first through hole of the first through holes in response to opening of the explosion-proof valve of a corresponding single-cell of the single-cells, so that the explosion-proof valve of the corresponding single-cell is in communication with the pressure relief cavity.

The present disclosure further provides a battery system. The battery system includes a plurality of single-cells and the battery box described above; and each of the single-cells is disposed in the battery box.

### Beneficial effects

In the battery box provided by the present disclosure, a first heat insulating layer is disposed on the first surface of the support plate, the first heat insulating layer is configured to seal each of the first through holes. That is, the first heat insulating layer is located between the explosion-proof valve of the corresponding single-cell and the first through hole, so as to prevent the adhesive in the first accommodating cavity from leaking from the opening position corresponding to the explosion-proof valve of the single-cell into the pressure relief cavity which will cause the pressure relief cavity to be blocked, and thereby reducing the risk of the pressure relief cavity being blocked. When an individual single-cell experiences thermal runaway, the explosion-proof valve of the single-cell opens, allowing the first heat insulating layer to pass through the corresponding first through hole, so as to realize timely evacuation of the high-temperature and high-pressure substances ejected when the thermal runaway occurs in the single-cell, thereby reducing the risk of the occurrence of thermal runaway of multiple single-cells, and reducing the risk of short circuiting caused by conductive particles ejected during thermal runaway of the single-cell and damage to related components due to high-temperature impact, and reducing thermal spread in the battery.

By providing the battery box described above, the battery system provided by the present disclosure can prevent the cell adhesive in the first accommodating cavity from leaking into the pressure relief cavity, thereby ensuring the normal operation of the battery system.

### DESCRIPTION OF DRAWINGS

FIG. 1 is a schematic diagram of a structure of a battery box according to some embodiments from a first viewing angle.
FIG. 2 is an exploded schematic diagram of a structure of a support plate according to some embodiments.
FIG. 3 is a schematic diagram of a partial structure of a battery box according to some embodiments.
FIG. 4 is a schematic diagram of a structure of a battery box according to some embodiments from a second viewing angle.
FIG. 5 is a schematic diagram of a cross-sectional structure from X0 to X1 in FIG. 4.
FIG. 6 is an enlarged schematic diagram of a structure of A in FIG. 5.
FIG. 7 is an enlarged schematic diagram of a structure of B in FIG. 5.
FIG. 8 is a schematic diagram of an assembled structure of a battery box according to some embodiments.
FIG. 9 is a schematic diagram of a cross-sectional structure from Y0 to Y1 in FIG. 8.
FIG. 10 is an enlarged schematic diagram of a structure of C in FIG. 9.
FIG. 11 is an enlarged schematic diagram of a structure of D in FIG. 9.

### Explanation of reference numerals:

100. Box main body; 110. Side plate assembly; 111. Connecting portion; 120. First accommodating cavity; 130. Support beam; 132. Second through hole; 134. Third through hole; 136. Fourth through hole; 138. Second accommodating cavity; 200. Support plate; 210. First through hole; 220. First heat insulating layer; 222. First heat insulating member; 230. Insulating layer; 240. Second heat insulating member group; 300. Bottom plate; 310. Pressure relief cavity; 320. Third heat insulating member; 400. Single-cell.

### DETAILED DESCRIPTION OF EMBODIMENTS

In the description of the present disclosure, unless otherwise explicitly specified and limited, the terms "coupled", "connected" and "fixed" should be understood in a broad sense. For example, it can be a fixed connection, a detachable connection, or form an integral body. it can be a mechanical connection or an electrical connection; and it can be a direct connection or an indirect connection through an intermediary. It can be an internal connection between two elements or an interaction between two elements. For those of ordinary skill in the art, the specific meanings of the above terms in the present disclosure may be understood based on specific circumstances.

In the present disclosure, unless otherwise explicitly specified and limited, a first feature being "above" or "under" a second feature includes that the first feature is in direct contact with the second feature, or it may include that the first feature is not in direct contact with the second feature, but is in contact with the second feature through additional features between them. Furthermore, the first feature being "on", "above" and "over" the second feature includes that the first feature is directly above or obliquely above the second feature, or simply means that the first feature is higher in horizontal height than the second feature. The first feature being "below", "under" and "beneath" the second feature includes that the first feature is directly below or obliquely below the second feature, or simply means that the first feature is less in horizontal height than the second feature.

In the description of the embodiments, the orientation or positional relationship indicated by terms such as "upper", "lower", "left", "right", "front", "rear" and the like are based on the orientation or positional relationship shown in the accompanying drawings. It is only for the convenience of description and simplifying the operation, and it does not indicate or imply that the device or element referred to must have a specific orientation, be constructed and operated in a specific orientation, therefore, it should not be interpreted as limitations of the present disclosure. In addition, the terms "first" and "second" are only used for descriptive purposes, and have no special meanings.

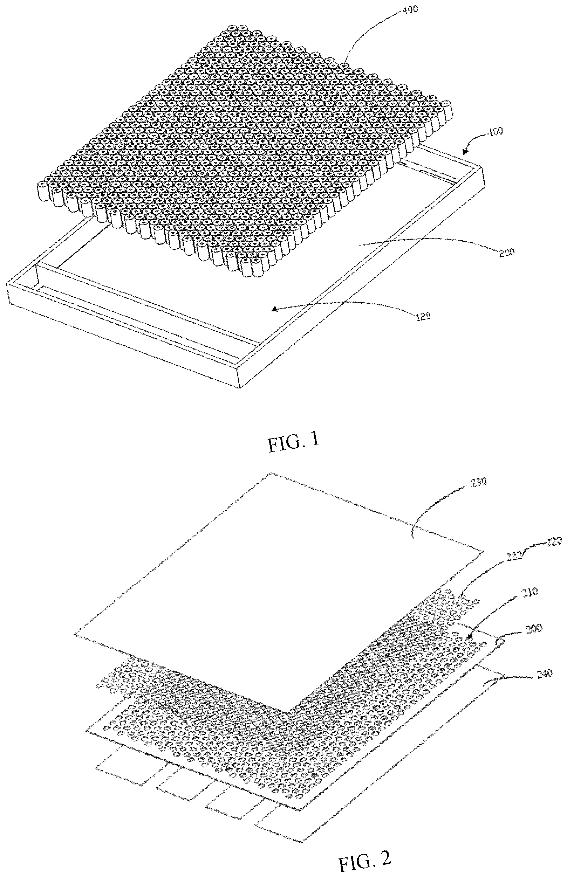

In one embodiment, as shown in FIG. 1 and FIG. 2, a battery box is provided, the battery box includes a box main body 100, a support plate 200 and a bottom plate 300. The box main body 100 includes a side plate assembly 110. The support plate 200 and the side plate assembly 110 are enclosed to form a first accommodating cavity 120. The first accommodating cavity 120 is configured to accommodate a plurality of single-cells 400, and each of the single-cells 400 is provided with an explosion-proof valve. The support plate 200 is provided with a plurality of first through holes 210. Each of the first through holes 210 is disposed in one-to-one correspondence with the explosion-proof valve of each of the single-cell 400. The first surface of the support plate 200 is provided with a first heat insulating layer 220. The first heat insulating layer 220 seals each of the first through holes 210. The bottom plate 300 and the support plate 200 are spaced apart, and the bottom plate 300, the support plate 200 and the side plate assembly 110 are enclosed to form a pressure relief cavity 310. The first heat insulating layer 220 is configured to pass through the corresponding first through hole 210 in response to the opening of the explosion-proof valve of the corresponding single-cell 400, so that the explosion-proof valve of the corresponding single-cell 400 is in communication with the pressure relief cavity 310.

The battery box can be configured to install and fix a plurality of single-cells 400. The battery box can be a structure with a square shape. Exemplarily, the battery box can also be in a polygonal shape or an irregular shape. The box main body 100 may be a box main body 100 made of metal or non-metal material. The box main body 100 may include a side plate assembly 110, and the side plate assembly 110 may be a side plate structure of an aluminum profile. Exemplarily, corresponding to a battery box in a square shape, the side plate assembly 110 is enclosed and formed by four side plates. For example, the four side plates can be divided into a front side plate, a rear side plate, a left side plate and a right side plate according to the orientation. The front side plate is disposed opposite to the rear side plate, and the left side plate is disposed opposite to the right side plate.

One end of the side plate assembly 110 is provided with at least one connecting portion 111. The support plate 200 is disposed at the connecting portion 111 of the side plate assembly 110. The support plate 200 is configured to support the single-cells 400. The support plate 200 and the side plate assembly 110 are enclosed to form the first accommodating cavity 120, and each of the single-cells 400 is disposed in the first accommodating cavity 120. Exemplarily, the single-cell 400 may be a cylindrical single-cell, and an explosion-proof valve is disposed at the bottom of the single-cell 400. The explosion-proof valve of the single-cell 400 is opened when thermal runaway occurs in the single-cell 400, so that the high-temperature substances and gases in the single-cell 400 can be discharged in time. The single-cells 400 are spaced apart and arranged in multiple rows and columns. In order to fix each of the single-cells 400 and avoid damage of the single-cells caused by shaking of the single-cells in the first accommodating cavity 120, adhesive needs to be injected into the first accommodating cavity 120. By filling the remaining space of the first accommodating cavity 120 with the adhesive, for example, the adhesive is filled in the gap between the single-cell 400 and the single-cell 400, thereby achieving firm installation of each of the single-cells 400. It should be noted that the adhesive may be foam adhesive.

The support plate 200 may be a sheet metal piece. For example, the support plate 200 may be a sheet metal piece made of aluminum alloy. The support plate 200 is manufactured as a whole piece, by avoiding the use of a support plate 200 with a spliced structure, the risk that the adhesive of the single-cell 400 will leak and then block the pressure relief cavity 310 can be reduced.

The support plate 200 is provided with a plurality of first through holes 210, and the first through holes 210 are spaced apart and arranged in multiple rows and multiple columns. It should be noted that the distance between the first through holes 210 can be determined according to the shape and size of the single-cell 400. Each of the first through holes 210 is disposed in one-to-one correspondence with the explosion-proof valve of each of the single-cells 400, that is, the position directly above the first through hole 210 corresponds to the explosion-proof valve of the corresponding cell. By providing the first through hole 210 that is matched with the explosion-proof valve of the single-cell 400 in the support plate 200, the first through hole 210 is configured to allow the high-temperature substances and gases ejected by the explosion-proof valve of the single-cell 400 to pass through and then enter into the pressure relief cavity 310 when thermal runaway occurs in the single-cell 400.

A first heat insulating layer 220 is disposed on the first surface of the support plate 200. The first heat insulating layer 220 may be a heat insulating layer made of mica or other high-temperature resistant insulating materials. The first heat insulating layer 220 seals each of the first through holes 210. The first heat insulating layer 220 can cover each of the first through holes 210. For example, the shape and size of the first heat insulating layer 220 are the same as the shape and size of the support plate 200, so that the first heat insulating layer 220 can completely cover and seal each of the first through holes 210.

The first heat insulating layer 220 can be disposed on the first surface of the support plate 200 through bonding or other methods in a sealed manner. By disposing the first heat insulating layer 220 on the first surface of the support plate 200 and sealing each of the first through holes 210 on the support plate 200 by the first heat insulating layer 220, that is, the opening position corresponding to the explosion-proof valve of the corresponding single-cell 400 is sealed, so that the adhesive of the single-cell 400 can be effectively prevented from overflowing from the first through hole 210 to the pressure relief cavity 310, thereby avoiding the pressure relief cavity 310 from being blocked and affecting the evacuation of the high-temperature and high-pressure substances generated by the thermal runaway of the single-cell 400.

The bottom plate 300 is disposed below the support plate 200, the bottom plate 300 and the support plate 200 are spaced apart, and the bottom plate 300, the support plate 200 and the side plate assembly 110 are enclosed to form the pressure relief cavity 310. A pressure relief valve may be disposed on the side wall or bottom portion of the pressure relief cavity 310. By opening the pressure relief valve, the high-temperature and high-pressure substances in the pressure relief cavity 310 can be discharged to the outside. Exemplarily, a pressure relief valve may be disposed at a corresponding position of the side plate assembly 110 or the bottom plate 300.

When any one of the single-cells 400 in the first accommodating cavity 120 experiences thermal runaway, the explosion-proof valve of the single-cell 400 is opened, causing the corresponding position of the first heat insulating layer 220 to be broken through due to the thermal runaway of the single-cell 400 and the first through hole 210 to be passed through, so that the explosion-proof valve of the corresponding single-cell 400 is in communication with the pressure relief cavity 310, and the high-temperature and high-pressure substances generated by the thermal runaway is transferred to the pressure relief cavity 310 through the corresponding first through hole 210. At the same time, the first heat insulating layer 220 is only broken through at the corresponding position where thermal runaway of the single-cell 400 occurs, other positions of the first heat insulating layer 220 remain intact, thereby effectively avoiding back flow of the high-temperature substances which will cause heating and short circuiting and result in thermal runaway of other single-cells 400.

In the battery box described above, the support plate 200 and the side plate assembly 110 are enclosed to form the first accommodating cavity 120, the first accommodating cavity 120 is configured to accommodate a plurality of single-cells 400, and each of the single-cells 400 is provided with an explosion-proof valve. The support plate 200 is provided with a plurality of first through holes 210. Each of the first through holes 210 is disposed in one-to-one correspondence with the explosion-proof valve of each of the single-cells 400. The first surface of the support plate 200 is provided with the first heat insulating layer 220. The first heat insulating layer 220 seals each of the first through holes 210. The bottom plate 300 and the support plate 200 are spaced apart, and the bottom plate 300, the support plate 200 and the side plate assembly 110 are enclosed to form the pressure relief cavity 310. The first heat insulating layer 220 is configured to pass through the corresponding first through hole 210 in response to the opening of the explosion-proof valve of the corresponding single-cell 400, so that the explosion-proof valve of the corresponding single-cell 400 is in communication with the pressure relief cavity 310, so as to avoid the cell adhesive in the first accommodating cavity 120 from leaking into the pressure relief cavity 310. In the present disclosure, a first heat insulating layer 220 is provided on the first surface of the support plate 200, and the first heat insulating layer 220 seals each of the first through holes 210. That is, the first heat insulating layer 220 is located between the explosion-proof valve of the corresponding single-cell 400 and the first through hole 210, so as to prevent the adhesive in the first accommodating cavity 120 from leaking from the opening position corresponding to the explosion-proof valve of the single-cell 400 into the pressure relief cavity 310 which will cause the pressure relief cavity 310 to be blocked, and thereby reducing the risk of the pressure relief cavity 310 being blocked. When an individual single-cell 400 experiences thermal runaway, the explosion-proof valve of the single-cell 400 opens, allowing the first heat insulating layer 220 to pass through the corresponding first through hole 210, so as to realize timely evacuation of the high-temperature and high-pressure substances ejected when the thermal runaway of the single-cell 400 occurs, thereby reducing the risk of the occurrence of thermal runaway of multiple single-cells 400, and reducing the risk of short circuiting caused by conductive particles ejected during thermal runaway of the single-cell 400 and damage to related components due to high-temperature impact, and reducing thermal spread in the battery.

In one embodiment, the first heat insulating layer 220 includes a plurality of first heat insulating members 222, and each of the first heat insulating member 222 seals each of the first through holes 210 in one-to-one correspondence.

The first heat insulating member 222 can be a heat insulating member made of mica or other high-temperature resistant insulating materials. The number of the first heat insulating members 222 is the same as the number of the first through holes 210 on the support plate 200. Each of first heat insulating members 222 seals each of the first through holes 210 in one-to-one correspondence. The shape of the first heat insulating member 222 may be square, circular or oval. Exemplarily, the shape of the first heat insulating member 222 is the same as the shape of the first through hole 210, for example, the shapes of the first heat insulating member 222 and the first through hole 210 are all circular. The size of the first heat insulating member 222 matches the size of the corresponding first through hole 210 on the support plate 200, so that the first heat insulating member 222 can seal the corresponding first through hole 210. For example, the size of the first heat insulating member 222 is larger than the size of the corresponding first through hole 210, and two adjacent first heat insulating members 222 are spaced apart, so that the first heat insulating member 222 can seal the corresponding first through hole 210, and meanwhile, it can effectively prevent back flow of the high-temperature substances generated by the thermal runaway of the single-cell 400 which will cause heating and short circuiting and result in thermal runaway of other single-cells 400.

In one embodiment, as shown in FIG. 2, FIG. 10 and FIG. 11, the support plate 200 is further provided with an insulating layer 230, and each of the first heat insulating members 222 is located between the insulating layer 230 and the first surface of the support plate 200.

The insulating layer 230 is in a film-like structure. The insulating layer 230 is disposed on and covers each of the first heat insulating members 222, that is, each of the first heat insulating members 222 is located between the insulating layer 230 and the first surface of the supporting plate 200. Exemplarily, the insulating layer 230 can be disposed on the first heat insulating members 222 by hot pressing or other methods.

The insulating layer 230 is disposed on the first surface of the support plate 200 and covers each of the first heat insulating members 222, so as to achieve insulation and protection for the bottom portion of each of the single-cells 400, and further to prevent the adhesive of the single-cell 400 from overflowing to the pressure relief cavity 310 below, thereby avoiding the pressure relief cavity 310 from being blocked and affecting the evacuation of high-temperature and high-pressure substances generated by thermal runaway of the single-cell 400.

For example, when any one of the single-cells 400 experiences thermal runaway, the explosion-proof valve of the single-cell 400 is opened, so that the insulating layer 230 and the corresponding first heat insulating member 222 at the position corresponding to the explosion-proof valve of the single-cell 400 is broken through due to the thermal runaway of the single-cell 400, and the first through hole 210 can be passed through, so that the explosion-proof valve of the corresponding single-cell 400 is in communication with the pressure relief cavity 310. The high-temperature and high-pressure substances generated by the thermal runaway are transferred to the pressure relief cavity 310 through the corresponding first through hole 210, so as to realize timely evacuation of high-temperature and high-pressure substances ejected when thermal runaway occurs in the single-cell 400, thereby reducing the risk of occurrence of thermal runaway of multiple single-cells 400 and reducing thermal spread of the battery.

In one embodiment, as shown in FIG. 2, FIG. 10 and FIG. 11, the second surface of the support plate 200 is provided with a second heat insulating member group 240, and the second heat insulating member group 240 is located on the side of the support plate 200 facing the bottom plate 300. The second heat insulating member group 240 is configured to seal each of the first through holes 210.

The second surface of the support plate 200 is opposite to the first surface. For example, the first surface of the support plate 200 is adjacent to the first accommodating cavity 120, and the second surface of the support plate 200 is adjacent to the pressure relief cavity 310. The second heat insulating member group 240 can include a plurality of second heat insulating members. Each of the second heat insulating members is in a sheet structure, and the second heat insulating members are spaced apart on the second surface of the support plate 200. Each of the second heat insulating member can be arranged on the second surface of the support plate 200 through bonding or other methods, so as to cover and seal each of the first through holes 210 at the corresponding position on the support plate 200. The second heat insulating member may be a heat insulating member made of mica or other high-temperature resistant insulating materials. Two adjacent second heat insulating members are spaced apart, so that the second heat insulating member can seal the corresponding first through holes 210, and at the same time, it can further avoid back flow of the high-temperature substances generated by the thermal runaway of the single-cell 400 which will cause heating or short circuiting and result in thermal runaway of other single-cells 400.

The second heat insulating member group 240 is disposed between the support plate 200 and the bottom plate 300, the second heat insulating member group 240 is disposed on the second surface of the support plate 200, and the second heat insulating member group 240 seals each of the first through holes 210 on the support plate 200. That is, the opening position corresponding to the explosion-proof valve of the corresponding single-cell 400 is sealed to achieve the double-sided sealing of the first through holes 210 on the support plate 200, so that the adhesive of the single-cell 400 can be effectively prevented from overflowing from the first through hole 210 to the pressure relief cavity 310, thereby avoiding the pressure relief cavity 310 from being blocked and affecting the evacuation of the high-temperature and high-pressure substances generated by the thermal runaway of the single-cell 400, and further reducing the risk of the pressure relief cavity 310 being blocked.

When any one of the single-cells 400 experiences thermal runaway, the explosion-proof valve of the single-cell 400 is opened, so that the first heat insulating member 222 and the second heat insulating member group 240 are broken through by the high-temperature substances generated by the thermal runaway of the single-cell 400, and the first through hole 210 can be passed through, so that the explosion-proof valve of the corresponding single-cell 400 is in communication with the pressure relief cavity 310. The high-temperature and high-pressure substances generated by the thermal runaway are transferred to the pressure relief cavity 310 through the corresponding first through hole 210. At the same time, due to the heat insulation effect of the first heat insulating member 222 and the second heat insulating member, only the first heat insulating member 220 located at the corresponding position where thermal runaway of the single-cell 400 occurs is broken through, other first heat insulating members 220 remain intact, thereby further reducing the risk of short circuiting caused by conductive particles ejected during thermal runaway of the single-cell 400 and damage to related components due to high temperature impact, and reducing thermal spread in the battery.

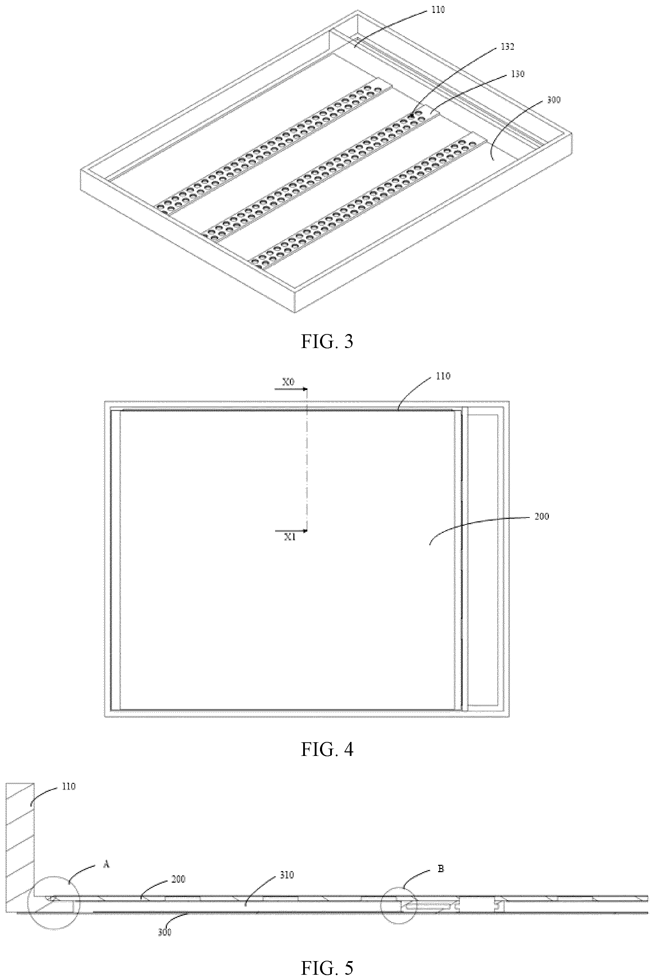

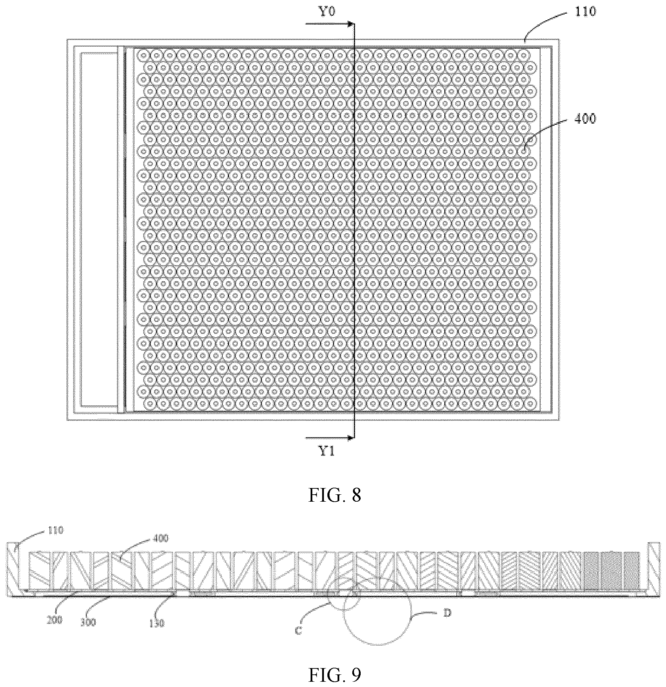

In one embodiment, as shown in FIG. 3 and FIG. 9, the box main body 100 further includes a plurality of support beams 130; each of the support beams 130 is disposed between the bottom plate 300 and the support plate 200. Each of the support beams 130 is provided with a second accommodating cavity 138, and the second accommodating cavity 138 is in communication with the pressure relief cavity 310.

The support beam 130 is disposed adjacently to the bottom portion of the side plate assembly 110. For example, the support beam 130 can be disposed at the bottom portion of the side plate assembly 110 by welding or screwing. The support beam 130 plays a role in reinforcing the support of the box main body 100.

By disposing the support plate 200 above the support beam 130 and disposing the bottom plate 300 below the support beam 130, that is, each of the support beams 130 is disposed between the bottom plate 300 and the support plate 200, so that the support plate 200 and the bottom plate 300 are spaced apart.

Exemplarily, three support beams 130 are spaced apart and disposed at the bottom portion of the side plate assembly 110, and the three support beams 130 are disposed between the bottom plate 300 and the support plate 200, thereby dividing the pressure relief cavity 310 into three pressure relief spaces. The second accommodating cavity 138 is provided in the support beam 130, and the second accommodating cavity 138 of the support beam 130 is in communication with the pressure relief cavity 310, the three pressure relief spaces are therefore in communication with each other, so that the high-temperature and high-pressure substances can be discharged in time through the pressure relief valve when the high-pressure and high-pressure substances generated by the thermal runaway of the single-cell 400 are collected in the pressure relief cavity 310.

It should be noted that since the internal cavity of the support beam 130 is in communication with the pressure relief cavity 310, the support beam 130 will withstand the impact of high-temperature conductive particles or gases. Exemplarily, the support beam 130 can be spray-coated so that a spray coating is formed on the outer surface and the inner wall of the support beam 130. The spray coating has the characteristics of high-temperature resistance and good insulation, which can effectively reduce the risk of short circuiting or melt-through of the body of the support beam 130 when thermal runaway occurs in the single-cell 400.

In one example, as shown in FIG. 3, a plurality of second through holes 132 are disposed on the first surface of at least one of the support beams 130. The second through holes 132 are disposed correspondingly to at least one of the first through holes 210, the second through holes 130 are in communication with at least one of the first through holes 210, and each of the second through holes 132 is in communication with the second accommodating cavity 138.

The first surface of the support beam 130 is the top surface. For example, the first surface of the support beam 130 is adjacent to the second surface of the support plate 200, and the first surface of the support beam 130 is parallel to the second surface of the support plate 200. The first surface of the support beam 130 is provided with a plurality of second through holes 132.

Exemplarily, the size of the second through hole 132 is larger than or equal to the size of the first through hole 210, and the shape of the second through hole 132 is the same as the shape of the first through hole 210. For example, the second through hole 132 is in a circular shape, and the second through hole 132 is disposed correspondingly to the corresponding first through hole 210, so that the explosion-proof valve of the corresponding single-cell 400 is in communication with the second accommodating cavity 138 of the support beam 130 when the corresponding first through hole 210 is passed through.

When the single-cell 400 above the support beam 130 experiences thermal runaway, the explosion-proof valve of the single-cell 400 is opened, causing the corresponding first heat insulating member 222 to be broken through due to the thermal runaway of the single-cell 400 and causing the first through hole 210 to be passed through, so that the explosion-proof valve of the corresponding single-cell 400, the first through hole 210, the second through hole 132 and the second accommodating cavity 138 are in communication with each other. High-temperature and high-pressure substances generated by thermal runaway are transferred to the second accommodating cavity 138 of the corresponding support beam 130 through the corresponding first through hole 210 and the second through hole 132, since the second accommodating cavity 138 of the support beam 130 is in communication with the pressure relief cavity 310, then the high-temperature and high-pressure substances in the second accommodating cavity 138 are transferred to the pressure relief cavity 310 and discharged to the external environment through the pressure relief valve, so as to prevent the first through hole 210 above the support beam 130 from being blocked by the support beam 130, thereby achieving in time evacuation of the high-temperature and high-pressure substances ejected when thermal runaway occurs in the single-cell 400, and reducing the risk of the occurrence of thermal runaway of multiple single-cells 400.

In one example, as shown in FIG. 8 to FIG. 11, a plurality of third through holes 134 are disposed on the second surface of at least one of the support beams 130, and the second surface of the support beam 130 is adjacent to the first surface of the support beam 130. The second accommodating cavity 138 is in communication with the pressure relief cavity 310 through each of the third through holes 134.

The support beam 130 may have a square strip-like structure. The second surface of the support beam 130 is adjacent to the first surface of the support beam 130, for example, the second surface of the support beam 130 is perpendicular to the first surface of the support beam 130.

The size of the third through hole 134 can be designed to be larger than the size of the second through hole 132. By disposing a plurality of third through holes 134 on the second surface of the support beam 130, so that the second accommodating cavity 138 of the support beam 130 is in communication with the pressure relief cavity 310 through each of the third through holes 134. When the single-cell 400 above the support beam 130 experiences thermal runaway, the explosion-proof valve of the single-cell 400 is opened, causing the corresponding first heat insulating member 222 to be broken through due to the thermal runaway of the single-cell 400 and causing the first through hole 210 to be passed through. High-temperature and high-pressure substances generated by thermal runaway are transferred to the second accommodating cavity 138 of the corresponding support beam 130 through the corresponding first through hole 210 and the second through hole 132, then the high-temperature and high-pressure substances in the second accommodating cavity 138 are evacuated to the pressure relief cavity 310 through the third through holes 134 and discharged to the external environment through the pressure relief valve, thereby achieving in time evacuation of the high-temperature and high-pressure substances ejected when the thermal runaway occurs in the single-cell 400, and reducing the risk of the occurrence of thermal runaway of multiple single-cells 400.

In one example, as shown in FIG. 8 to FIG. 11, a plurality of fourth through holes 136 are disposed on the third surface of at least one of the support beams 130, and the third surface of the support beam 130 is adjacent to the first surface of the support beam 130. The second accommodating cavity 138 is in communication with the pressure relief cavity 310 through each of the fourth through holes 136.

The third surface of the support beam 130 is adjacent to the first surface of the support beam 130, for example, the third surface of the support beam 130 is perpendicular to the first surface of the support beam 130. Exemplarily, each of the fourth through holes 136 is disposed in one-to-one correspondence with each of the third through holes 134, so that a plurality of pressure relief channels are formed in the second accommodating cavity 138 of the support beam 130, and each of the pressure relief channels is in communication with the pressure relief cavity 310.

The size of the fourth through hole 136 can be designed to be larger than the size of the second through hole 132. By disposing a plurality of fourth through holes 136 on the third surface of the support beam 130, the second accommodating cavity 138 of the support beam 130 is then in communication with the pressure relief cavity 310 through the fourth through holes 136. When the single-cell 400 above the support beam 130 experiences thermal runaway, the explosion-proof valve of the single-cell 400 is opened, causing the corresponding first heat insulating member 222 to be broken through due to the thermal runaway of the single-cell 400 and causing the first through hole 210 to be passed through. High-temperature and high-pressure substances generated by thermal runaway are transferred to the second accommodating cavity 138 of the corresponding support beam 130 through the corresponding first through hole 210 and the second through hole 132, then the high-temperature and high-pressure substances in the second accommodating cavity 138 are evacuated to the pressure relief cavity 310 through the fourth through holes 136 and discharged to the external environment through the pressure relief valve, thereby achieving in time evacuation of the high-temperature and high-pressure substances ejected when the thermal runaway occurs in the single-cell 400, and reducing the risk of the occurrence of thermal runaway of multiple single-cells 400.

In one embodiment, the distance between the support plate and the bottom plate is greater than or equal to 6 millimeters. It should be noted that in the case where the space limitations of the battery box are satisfied, the distance between the support plate and the bottom plate should be designed as large as possible. Exemplarily, the distance between the support plate and the bottom plate can be designed to be greater than or equal to 6 millimeters and less than 10 millimeters. By designing the distance between the support plate and the bottom plate, the space of the battery box can be satisfied, while ensuring that the explosion-proof valve can be opened when thermal runaway occurs in the single-cell, and that the bottom portion of the battery box will not be broken through.

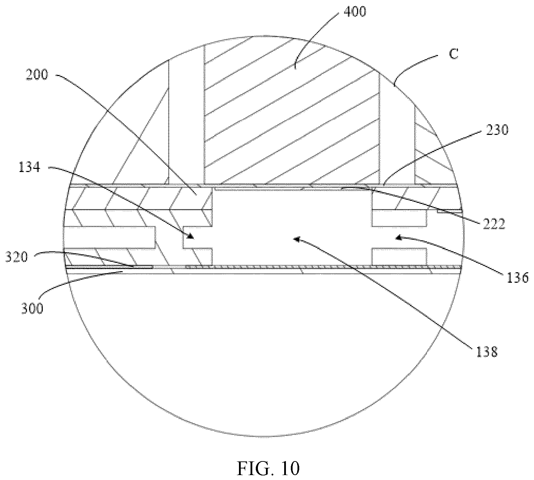

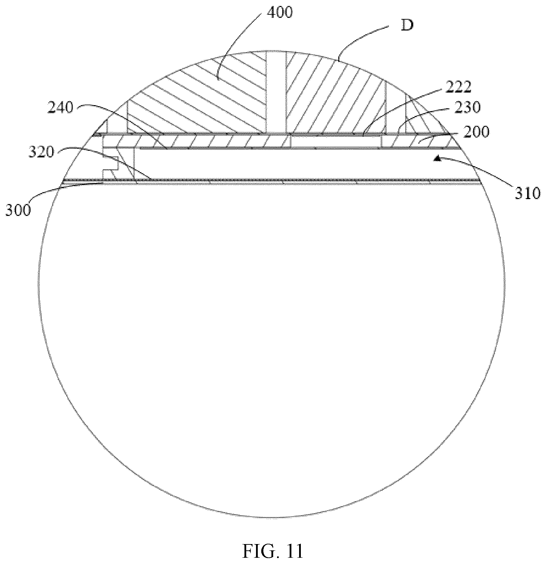

In one embodiment, as shown in FIG. 10 and FIG. 11, the bottom plate 300 is provided with a third heat insulating member 320, and the third heat insulating member 320 is located between the bottom plate 300 and the support plate 200.

The third heat insulating member 320 can be disposed on the top surface of the bottom plate 300. For example, the third heat insulating member 320 can be disposed on the top surface of the bottom plate 300 by bonding or other methods. The third heat insulating member 320 may be a heat insulating member made of mica or other high-temperature resistant insulating materials. The shape of the third heat insulating member 320 may be a sheet-like shape. The third heat insulating member 320 is disposed on and covers the top surface of the bottom plate 300, so as to effectively block the impact of high-temperature substances on the bottom plate 300 and prevent the bottom plate 300 from being melted through. At the same time, the third heat insulating member 320 can prevent the high-temperature conductive particles ejected during the thermal runaway of the single-cell 400 from contacting the bottom plate 300 and causing short circuiting in the battery system.

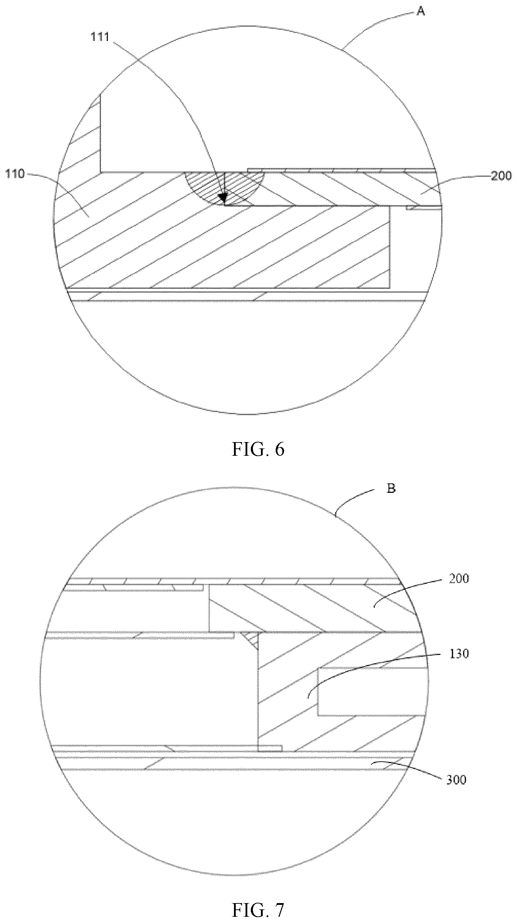

In one embodiment, as shown in FIG. 4 to FIG. 6, the support plate 200 and the side plate assembly 110 are fixed connected in a sealed manner.

The support plate 200 and the side plate assembly 110 may be fixedly connected in a sealed manner by welding. For example, the periphery of the support plate 200 can be fixedly connected to the side plate assembly 110 in a sealed manner by means of friction stir welding or arc welding, thereby enhancing the sealing performance between the support plate 200 and the side plate assembly 110, and preventing the adhesive in the first accommodating cavity 120 from leaking into the pressure relief cavity 310 through the connecting seam of the support plate 200 and blocking the pressure relief cavity 310, and further reducing the risk of the adhesive leaking and blocking the pressure relief cavity 310.

In one example, as shown in FIG. 4, FIG. 5 and FIG. 7, the support plate 200 and the support beam 130 can be fixedly connected through local welding. For example, the support plate 200 and the support beam 130 can be fixedly connected through arc welding, thereby enhancing the firmness of the battery box.

In one embodiment, a battery system is further provided, the battery system includes a plurality of single-cells and the battery box described in any one of the above embodiments, and each of the single-cell is disposed in the battery box.

The single-cell can be a cylindrical cell, and an explosion-proof valve is disposed at the bottom of each of the single-cells. The single-cells are arranged in the battery box in multiple rows and columns.

For the specific description of the battery box, reference can be made to the specific description of the battery box in the above embodiments, and which will not be described again herein.

A plurality of single-cells are disposed in the first accommodating cavity enclosed between the support plate and the side plate assembly. The support plate is provided with a plurality of first through holes, each of the first through holes is disposed in one-to-one correspondence with the explosion-proof valve of each of the single-cells. The first surface of the support plate is provided with a plurality of first heat insulating members, and each of the first heat insulating members seals each of the first through holes in one-to-one correspondence. The bottom plate and the support plate are spaced apart, and the bottom plate, the support plate and the side plate assembly are enclosed to form the pressure relief cavity. The first heat insulating member is configured to pass through the corresponding first through hole in response to the opening of the explosion-proof valve of a corresponding single-cell, so that the explosion-proof valve of the corresponding single-cell is in communication with the pressure relief cavity, thereby avoiding the cell adhesive in the first accommodating cavity from leaking and entering the pressure relief cavity.

In the embodiments described above, a plurality of first heat insulating members are disposed on the first surface of the support plate, each of the first heat insulating members seals each of the first through holes in one-to-one correspondence. That is, each of the first heat insulating members is located between the explosion-proof valve of the corresponding single-cell and the first through hole, so as to prevent the adhesive in the first accommodating cavity from leaking from the opening position corresponding to the explosion-proof valve of the single-cell into the pressure relief cavity which will cause the pressure relief cavity to be blocked, and thereby reducing the risk of the pressure relief cavity being blocked. When an individual single-cell experiences thermal runaway, the explosion-proof valve of the single-cell opens, allowing the corresponding first heat insulating member to pass through the corresponding first through hole, so as to realize timely evacuation of the high-temperature and high-pressure substances ejected when thermal runaway occurs in the single-cell, thereby reducing the risk of the occurrence of thermal runaway of multiple single-cells, and reducing the risk of short circuiting caused by conductive particles ejected during thermal runaway of the single-cell and the damage to related components due to high-temperature impact, and reducing thermal spread in the battery.

It should be noted that the battery system may further include a battery management system (BMS) and other components. The specific battery system may include more components than those described in the above embodiments, or combines certain components, or has different component arrangements.

## Claims

1. A battery box **characterized by** comprising:
a box main body (100), wherein the box main body (100) comprises a side plate assembly (110);
a support plate (200), wherein the support plate (200) and the side plate assembly (110) are enclosed to form a first accommodating cavity (120), the first accommodating cavity (120) is configured to accommodate a plurality of single-cells (400), and each of the single-cells (400) is provided with an explosion-proof valve; wherein the support plate (200) is provided with a plurality of first through holes (210), and each of the first through holes (210) is disposed in one-to-one correspondence with the explosion-proof valve of each of the single-cells (400), a first surface of the support plate (200) is provided with a first heat insulating layer (220), and the first heat insulating layer (220) seals each of the first through holes (210); and
a bottom plate (300), wherein the bottom plate (300) and the support plate (200) are spaced apart, and the bottom plate (300), the support plate (200) and the side plate assembly (110) are enclosed to form a pressure relief cavity (310); wherein the first heat insulating layer (220) is configured to pass through a corresponding first through hole (210) of the first through holes (210) in response to opening of the explosion-proof valve of a corresponding single-cell (400) of the single-cells (400), so that the explosion-proof valve of the corresponding single-cell (400) is in communication with the pressure relief cavity (310).

2. The battery box according to claim 1, **characterized in that** the first heat insulating layer (220) comprises a plurality of first heat insulating members (222), and each of the first heat insulating members (222) seals each of the first through holes (210) in one-to-one correspondence.

3. The battery box according to claim 2, **characterized in that** the support plate (200) is further provided with an insulating layer (230), and each of the first heat insulating members (222) is located between the insulating layer (230) and the first surface of the support plate (200).

4. The battery box according to any one of claims 1 to 3, **characterized in that** a second surface of the support plate (200) is provided with a second heat insulating member group (240), the second heat insulating member group (240) is located on a side of the support plate (200) facing the bottom plate (300), and the second heat insulating member group (240) is configured to seal each of the first through holes (210).

5. The battery box according to any one of claims 1 to 4, **characterized in that** the box main body (100) further comprises a plurality of support beams (130); each of the support beams (130) is disposed between the bottom plate (300) and the support plate (200); and
each of the support beams (130) is provided with a second accommodating cavity (138), and the second accommodating cavity (138) is in communication with the pressure relief cavity (310).

6. The battery box according to claim 5, **characterized in that** a first surface of at least one of the support beams (130) is provided with a plurality of second through holes (132), the second through holes (132) are disposed correspondingly to at least one of the first through holes (210), and the second through holes (132) are correspondingly in communication with the at least one of the first through holes (210); and
each of the second through holes (132) is in communication with the second accommodating cavity (138).

7. The battery box according to claim 6, **characterized in that** a second surface of at least one of the support beams (130) is provided with a plurality of third through holes (134), and the second surface of the support beam (130) is adjacent to the first surface of the support beam (130); and
the second accommodating cavity (138) is in communication with the pressure relief cavity (310) through each of the third through holes (134).

8. The battery box according to claim 7, **characterized in that** a third surface of at least one of the support beams (130) is provided with a plurality of fourth through holes (136), and the third surface of the support beam (130) is adjacent to the first surface of the support beam (130); and
the second accommodating cavity (138) is in communication with the pressure relief cavity (310) through each of the fourth through holes (136).

9. The battery box according to any one of claims 1 to 8, **characterized in that** a distance between the support plate (200) and the bottom plate (300) is greater than or equal to 6 millimeters.

10. The battery box according to any one of claims 1 to 9, **characterized in that** the bottom plate (300) is provided with a third heat insulating member (320), and the third heat insulating member (320) is located between the bottom plate (300) and the support plate (200); and/or
the support plate (200) and the side plate assembly (110) are fixedly connected in a sealed manner; and/or
the support plate (200) is manufactured in one piece.

11. The battery box according to any one of claims 5 to 10, **characterized in that** a spray coating is disposed on an outer surface and an inner wall of at least one of the support beams (130).

12. The battery box according to any one of claims 1 to 11, **characterized in that** the single-cells (400) comprise at least one cylindrical cell.

13. The battery box according to any one of claims 2 to 12, **characterized in that** a size of each of the first heat insulating members (222) is larger than a size of a corresponding one of the first through holes (210), and two adjacent ones of the first insulating members are spaced apart.

14. The battery box according to any one of claims 1 to 13, **characterized in that** the first accommodating cavity (120) is injected with adhesive; and/or
the first heating insulating layer (220) comprises mica; and/or a shape and a size of the first heat insulating layer (220) are same as a shape and a size of the support plate (200); and/or
the battery box is in a square shaped structure.

15. A battery system **characterized by** comprising a plurality of single-cells (400) and the battery box according to any one of claims 1 to 14; and
wherein each of the single-cells (400) is disposed in the battery box.
